# EUROPEAN PATENT APPLICATION

(11) **EP 4 600 898 A1**
(43) Date of publication of application: **13.08.2025**
(21) Application number: 25156382.1
(22) Date of filing: 06.02.2025
(51) Int. Cl.: G06T 7/00

(54) **AI MODEL FOR COMPONENT HEALTH ASSESSMENT USING NON-DESTRUCTIVE TESTING DATA**

(30) Priority: 06.02.2024 US 202418434286
(71) Applicant: PRATT & WHITNEY CANADA CORP., Longueuil, Québec J4G 1A1 (CA)
(72) Inventor: CRAIG, David, Brossard, J4Y 0R5 (CA); BOYD, Peter, Mississauga, L5N 2H5 (CA); BYERS, Justin, Saint-Lambert, J4P 2K2 (CA); FANG, Jing, Toronto, M4W 0B1 (CA)
(74) Representative: Dehns

(57) **Abstract**

A method (100) for monitoring the health of a component (16) of a machine includes obtaining non-destructive structural integrity testing data (14) of the component (16) of the machine; utilizing a first machine learning algorithm, which includes a first type of neural network (20), to extract and quantify one or more features of the component from the non-destructive structural integrity testing data; and utilizing a second machine learning algorithm, which includes a second type of neural network (24), to perform a health assessment of the component based on the extracted features. The first type of neural network (20) and the second type of neural network (24) are different from each other. The method also includes providing a notification (28) of the health assessment. A computing device (10) is also disclosed.

## Description

### BACKGROUND

This application relates to component health assessment using non-destructive testing data.

Production processes for components often create defects which can negatively affect component life, but can be detected using various non-destructive testing methods (NDTs). Examples of defects include insufficient braze coverage in components such as fuel nozzles or joints due to the manufacturing process. Another example is delamination in composite materials. Additive manufactured components may also exhibit internal defects due to structural complexities, material variability, etc. Such defects could result in a shorter useful life for the part, and thereby necessitate part replacement according to an earlier time frame than would be necessary for a typical part.

The current methodology to identify defects includes non-destructive testing like x-rays, visual inspections, computed tomography (CT), fluorescent penetrant inspection (FPI), vibration testing, etc.

### SUMMARY

According to a first aspect of the invention there is provided a computer-implemented method for monitoring the health of a component of a machine, the method including obtaining non-destructive structural integrity testing data of the component of the machine; utilizing a first machine learning algorithm, which includes a first type of neural network, to extract and quantify one or more features of the component from the non-destructive structural integrity testing data; and utilizing a second machine learning algorithm, which includes a second type of neural network, to perform a health assessment of the component based on the extracted features. The first type of neural network and the second type of neural network are different from each other. The method also includes providing a notification of the health assessment.

In a further embodiment of the foregoing embodiment, the second machine learning algorithm further bases the health assessment of the component on a service history of the component.

In a further embodiment of any of the foregoing embodiments, the first type of neural network is a convolutional neural network, and the second type of neural network is a recurrent neural network.

In a further embodiment of any of the foregoing embodiments, the health assessment includes an estimate of a remaining life of the component.

In a further embodiment of any of the foregoing embodiments, the health assessment includes an estimated amount of time the component can be used in the machine before a next maintenance event should be performed for the component.

In a further embodiment of any of the foregoing embodiments, the health assessment includes an indication of whether it is acceptable to continue using the component in the machine.

In a further embodiment of any of the foregoing embodiments, the non-destructive testing data includes one or more images of the component, and the extracted features include one or more anomalous regions of the one or more images.

In a further embodiment of any of the foregoing embodiments, the quantification of the one or more anomalous regions includes at least one of a depth of the anomalous region, a width of the anomalous region, a length of the anomalous region, an area of the anomalous region, a location of the anomalous region, and a proximity between multiple anomalous regions, a severity of the anomalous region, and a shape of the anomalous region.

In a further embodiment of any of the foregoing embodiments, the one or more images comprise x-ray images.

In a further embodiment of any of the foregoing embodiments, the one or more images comprise computed tomography (CT) images.

In a further embodiment of any of the foregoing embodiments, the one or more images comprise fluorescent penetrant inspection (FPI) images.

In a further embodiment of any of the foregoing embodiments, the one or more images comprise ultrasonic c-scan images.

In a further embodiment of any of the foregoing embodiments, the non-destructive testing data includes vibration testing data from vibration testing of the component.

In a further embodiment of any of the foregoing embodiments, the component is a first type of component, and the method includes training the second machine learning algorithm based on predefined component life acceptance parameters for the first type of component; comparing a plurality of the quantified extracted features for a plurality of the components of the first type with actual end of life data for the plurality of components; and dynamically adjusting the predefined component life acceptance parameters based on the comparing.

According to a second aspect of the invention there is provided a computing device including processing circuitry operatively connected to memory. The processing circuitry is configured to utilize a first machine learning algorithm, which includes a convolutional neural network, to extract and quantify one or more features of a component of a machine from non-destructive structural integrity testing data of the component. The processing circuitry is also configured to utilize a second machine learning algorithm, which includes a recurrent neural network, to perform a health assessment of the component based on the extracted features. The first type of neural network and the second type of neural network are different from each other. The processing circuitry is configured to provide a notification of the health assessment.

In a further embodiment of the foregoing embodiment, the health assessment includes at least one of an indication of whether it is acceptable to continue using the component in the machine, an estimate of a remaining life of the component, and an estimated amount of time the component can be used in the machine before a next maintenance event should be performed for the component.

In a further embodiment of any of the foregoing embodiments, the non-destructive testing data includes one or more images of the component, and the extracted features include one or more anomalous regions of the one or more images. The one or more images include at least one of the following: x-ray images, computed tomography (CT) images, fluorescent penetrant inspection (FPI) images, and ultrasonic c-scan images.

In a further embodiment of any of the foregoing embodiments, the non-destructive testing data includes vibration testing data from vibration testing of the component.

In a further embodiment of any of the foregoing embodiments, the second machine learning algorithm further bases the health assessment of the component on a service history of the component.

In a further embodiment of any of the foregoing embodiments, the component is a first type of component, and the processing circuitry is configured to train the second machine learning algorithm based on predefined component life acceptance parameters for the first type of component, compare a plurality of the quantified extracted features for a plurality of the components of the first type with actual end of life data for the plurality of components, and dynamically adjust the predefined component life acceptance parameters based on the comparing.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Certain exemplary embodiments will now be described in greater detail by way of example only and with reference to the accompanying drawings in which:
Figure 1 is a schematic view of a system for component health assessment;
Figure 2 is a schematic view of a method performed by the system of Figure 1; and
Figure 3 is a schematic view of a computing device that may be used in the system of Figure 1.

### DETAILED DESCRIPTION

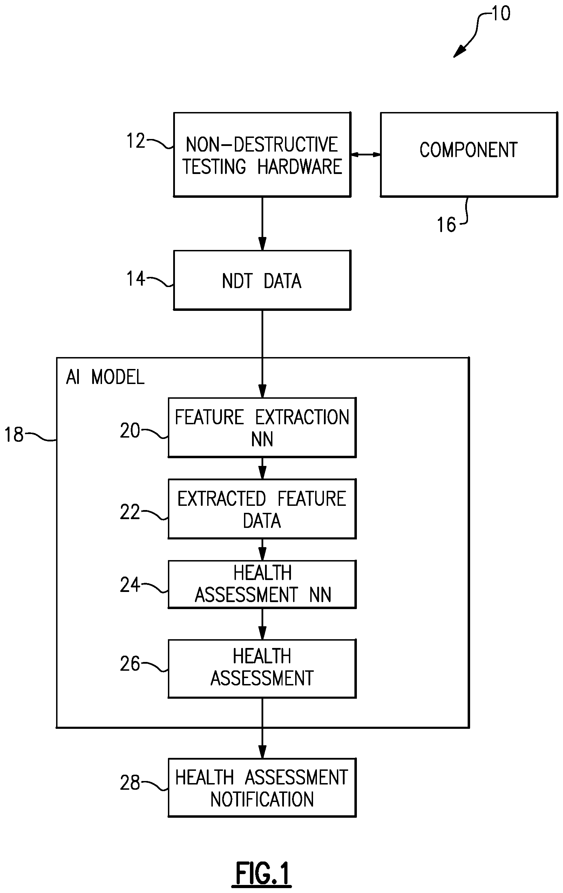

Figure 1 is a schematic view of an example system 10 for component health assessment. The system 10 includes non-destructive testing (NDT) hardware 12 that provides NDT structural integrity data 14 (hereinafter "NDT data") for a component 16 of a machine, such as an aircraft (e.g., a gas turbine engine). The component 16 may be a turbine blade, fuel nozzle, joint, or other rigid component, for example. The component 16 may be manufactured through different processes, such as additive Manufacturing, sand casting, metal injection moulding, etc., and may include complex structures and/or composite materials.

Some non-limiting examples of NDT data 14 that may be provided in the system 10 include images of the component 16 and/or vibration testing data. In one or more embodiments, the NDT data 14 output by the NDT hardware 12 includes one or more of the following types of images: x-ray images, computed tomography (CT) images, fluorescent penetrant inspection (FPI) images, and ultrasonic c-scan images (e.g., color maps).

An artificial intelligence model 18 includes a feature extraction neural network 20, which includes a first type of neural network, and a health assessment neural network 24, which includes a second type of neural network that is different from the first type of neural network. In one or more embodiments, the first type of neural network is a convolutional neural network (CNN) and the second type of neural network is a recurrent neural network (RNN).

The feature extraction neural network 20 is trained using historical training data of parts having anomalous regions, e.g., due to cracks. The training data may be annotated by a human expert to identify and label relevant defects (e.g., quantified by one or more metrics, such as size). The trained feature extraction neural network 20 may be verified with one or more test images to determine an extent to which the feature extraction neural network 20 can accurately detect relevant features.

The feature extraction neural network 20, having been trained, extracts and quantifies one or more anomalous features of the component 16 from the NDT data 14 and thereby outputs extracted feature data 22. The health assessment neural network 24 performs a health assessment of the component 16 based on the extracted feature data 22, and outputs a health assessment 26. The system 10 provides a health assessment notification 28 that is indicative of the health assessment 26 (e.g., the notification may include a copy of the health assessment itself, or a notification that the assessment is available).

The health assessment 26 may include any one or more of the following: an estimate of a remaining life of the component 16, an estimated amount of time the component can be used in the machine before a next maintenance event should be performed for the component 16, and an indication of whether it is acceptable to continue using the component in the machine. The health assessment 26 may also be used as an evidentiary basis for substantiating / justifying the extension or reduction of the service life of the component.

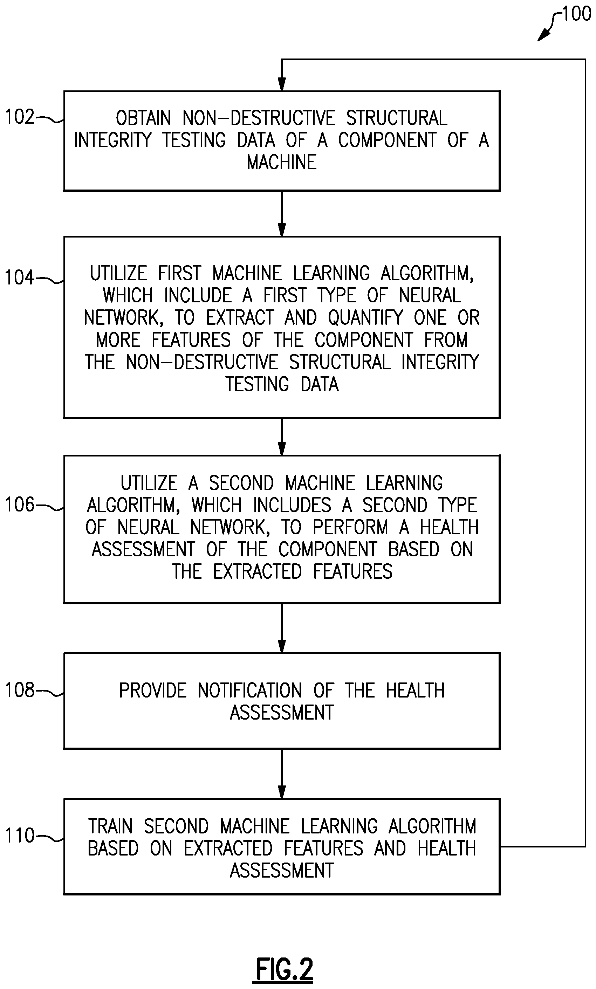

Figure 2 is a schematic view of an example method 100 performed by the system of Figure 1. NDT data 14 is obtained for component 16, which is a component of a machine (step 102). Obtaining the data could involve utilizing the NDT hardware 12 to create the NDT data 14, or receiving the NDT data 14 from storage and/or from a third party that utilized the NDT hardware 12 to create the NDT data 14, for example.

A first machine learning algorithm, which includes a first type of neural network (i.e., feature extraction neural network 20, which may be a CNN), is utilized to extract and quantify one or more features of the component from the NDT data (step 104), and thereby output extracted feature data 22.

A second machine learning algorithm, which includes a second type of neural network (i.e., health assessment neural network 24, which may be a RNN), is utilized to perform a health assessment of the component 16 based on the extracted feature data 22 (step 106). The first type of neural network and the second type of neural network are different types of neural networks. A notification 28 of the health assessment 26 is provided (step 108).

The second machine learning algorithm is trained based on the extracted feature data 22 and the health assessment 26 (step 110). To elaborate, the health assessment neural network 24 correlates the extracted / quantified extracted feature data 22 to a servicing history of the component 16 and/or other components of the same type. The health assessment neural network 24 is then further trained for health assessment of subsequent components based on the correlation.

In the example of images as NDT data 14, the feature extraction neural network 20 analyzes and discretizes the image pixels for appropriate quantification and qualification of the anomalous image areas, which may correspond to damage, for example. The health assessment neural network 24 processes the extracted feature data 22 to qualify a health of the component 16 based on the extracted feature data.

As discussed above, the feature extraction neural network 20 extracts anomalous features of the component 16 from the NDT data 14, and quantifies the extracted features using metrics. The metrics for image NDT data 14 may include one or more of the following, for example:
- depth of the anomalous region;
- width of the anomalous region;
- length of the anomalous region;
- area of the anomalous region;
- location of the anomalous region (e.g., in relation to an edge of the component 16);
- shape of the anomalous region;
- a severity of the anomalous region;
- proximity between multiple anomalous regions;
- anomalous region population density;
- size of the anomalous area (e.g., in relation to an area of the component 16 or a section of the component 16);
- percentage coverage of anomalous area to a particular NDT image and/or to a total area of the component 16.

In examples where the NDT hardware 12 performs ultrasonic c-scans scans of the component 16, the NDT data 14 may describe amplitude detected peaks and time of flight in the c-scans.

In examples where the NDT hardware 12 performs vibration testing, the NDT data 14 from such testing describes a frequency response of the component 16 to the testing, such as mode shapes.

The health assessment neural network 24 is initially trained based on historical NDT data of components (e.g., in-service components), and appropriate metrics like time-on-wing, cycles, damage/failure observations. Such metrics are tabulated in a database, and fed into the artificial intelligence model 18. As part of that initial training, existing inspection data is labelled with relevant parameters such as the various metrics described above.

The health assessment neural network 24 identifies relevant parameters from the extracted feature data 22, and compares them to historical data and predetermined metrics (e.g., predefined thresholds) to establish the acceptability of parts. The health assessment neural network 24 finds correlation between parameters and component life and performance. The health assessment 26 may include part acceptability, an estimation of remaining life and time before next maintenance event based on established correlation.

Over time, the health assessments 26 output from the AI model 18 for components 16 are compared to actual data collected, and differences between the two are used to retrain the health assessment neural network 24 to increase its accuracy. As an example, if the health assessment neural network 24 predicted a part would have 2,000 hours left of useful life, and it actually had 3,000 hours of useful life. That discrepancy may be used to further train the health assessment neural network 24.

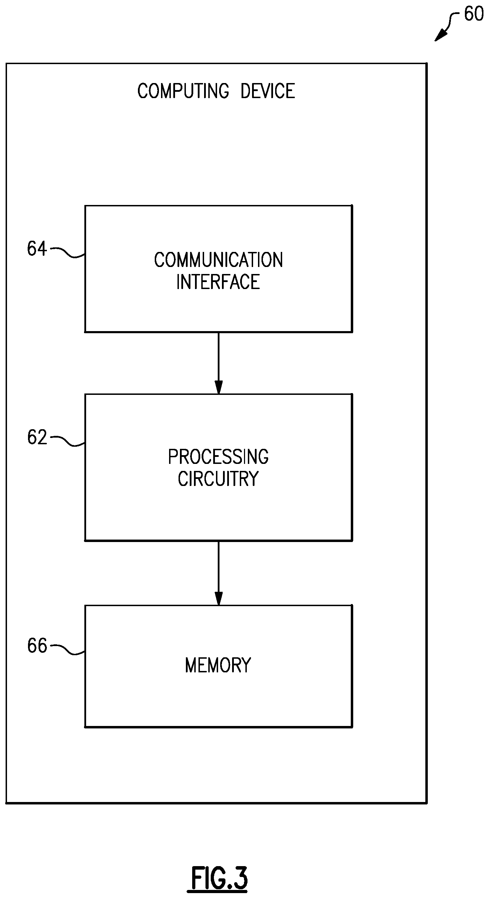

Figure 3 is a schematic view of an example computing device 60 that may be used in the system of Figure 1 to implement the artificial intelligence model 18. The computing device 60 includes processing circuitry 62 operatively connected to a memory 64 and a communication interface 66. The processing circuitry 62 may include one or more microprocessors, microcontrollers, application specific integrated circuits (ASICs), or the like, for example. The memory 64 may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The memory 64 may store the neural networks 20, 24 described above, for example.

The communication interface 66 is operable to communicate with external devices for sending and receiving data (e.g., wired or wireless communication), such as receiving the NDT data 14. Although only a single computing device 60 is discussed in connection with Figure 4, it is understood that multiple computing devices may be used, such that the artificial intelligence model 18 is spread over multiple computing devices, in which case the collective processing circuitry of the computing devices provides the artificial intelligence model 18 features discussed herein.

Conventionally, known NDT testing techniques such as x-rays, visual inspections, computed tomography (CT), fluorescent penetrant inspection (FPI), and vibration testing offer observations on the structural integrity of a component, but do not elaborate on a component's future performance or service life. The features discussed herein provide for automated processing of NDT data, and deriving accurate health assessments (e.g., remaining service life) therefrom.

Although example embodiments have been disclosed, a worker of ordinary skill in this art would recognize that certain modifications would come within the scope of the invention as defined in the appended claims. For that reason, the following claims should be studied to determine the scope of protection.

## Claims

1. A computer-implemented method (100) for monitoring the health of a component (16) of a machine, comprising:
obtaining (102) non-destructive structural integrity testing data (14) of the component (16) of a machine;
utilizing (104) a first machine learning algorithm, which comprises a first type of neural network (20), to extract and quantify one or more features of the component from the non-destructive structural integrity testing data;
utilizing (106) a second machine learning algorithm, which comprises a second type of neural network (24), to perform a health assessment of the component based on the extracted one or more features, wherein the first type of neural network and the second type of neural network are different from each other; and
providing (108) a notification (28) of the health assessment;
wherein the health assessment includes at least one of: an indication of whether it is acceptable to continue using the component in the machine, an estimate of a remaining life of the component, and an estimated amount of time the component can be used in the machine before a next maintenance event should be performed for the component.

2. The method (100) of claim 1, wherein the second machine learning algorithm further bases the health assessment of the component (16) on a service history of the component (16).

3. The method (100) of claim 1 or 2, wherein:
the first type of neural network (20) is a convolutional neural network; and
the second type of neural network (24) is a recurrent neural network.

4. The method (100) of any preceding claim, wherein the non-destructive testing data (14) comprises one or more images of the component (16), and the extracted one or more features comprise one or more anomalous regions of the one or more images.

5. The method (100) of claim 4, wherein quantifying the one or more features includes at least one of a depth of the one or more anomalous regions, a width of the one or more anomalous regions, a length of the one or more anomalous regions, an area of the one or more anomalous regions, a location of the one or more anomalous regions, a proximity between multiple anomalous regions, a severity of the one or more anomalous regions, and a shape of the one or more anomalous regions.

6. The method of claim 4 or 5, wherein the one or more images comprise x-ray images.

7. The method of any of claims 4 to 6, wherein the one or more images comprise computed tomography (CT) images.

8. The method of any of claims 4 to 7, wherein the one or more images comprise fluorescent penetrant inspection (FPI) images.

9. The method of any of claims 4 to 8, wherein the one or more images comprise ultrasonic c-scan images.

10. The method (100) of any preceding claim, wherein the non-destructive testing data (14) comprises vibration testing data from vibration testing of the component (16).

11. The method (100) of any preceding claim, wherein the component (16) is a first type of component and the method comprises:
training the second machine learning algorithm (24) based on predefined component life acceptance parameters for the first type of component;
comparing a plurality of the quantified extracted features for a plurality of the components of the first type with actual end of life data for the plurality of components; and
dynamically adjusting the predefined component life acceptance parameters based on the comparing.

12. A computing device (60), comprising:
processing circuitry (62) operatively connected to memory (66), the processing circuitry configured to:
utilize a first machine learning algorithm, which comprises a convolutional neural network, to extract and quantify one or more features of a component of a machine from non-destructive structural integrity testing data of the component;
utilize a second machine learning algorithm, which comprises a recurrent neural network, to perform a health assessment of the component based on the extracted features, wherein the first type of neural network and the second type of neural network are different from each other; and
provide a notification of the health assessment.

13. The computing device of claim 12, wherein the health assessment comprises at least one of:
an indication of whether it is acceptable to continue using the component in the machine;
an estimate of a remaining life of the component; and
an estimated amount of time the component can be used in the machine before a next maintenance event should be performed for the component.

14. The computing device (60) of claim 12 or 13, wherein:
the non-destructive testing data comprises one or more images of the component;
the extracted features comprise one or more anomalous regions of the one or more images; and
the one or more images include at least one of the following: x-ray images, computed tomography (CT) images, fluorescent penetrant inspection (FPI) images, and ultrasonic c-scan images; and/or
wherein the non-destructive testing data comprises vibration testing data from vibration testing of the component; and/or
wherein the second machine learning algorithm further bases the health assessment of the component on a service history of the component.

15. The computing device (60) of any of claims 12 to 14, wherein the component is a first type of component and the processing circuitry is configured to:
train the second machine learning algorithm based on predefined component life acceptance parameters for the first type of component;
compare a plurality of the quantified extracted features for a plurality of the components of the first type with actual end of life data for the plurality of components; and
dynamically adjust the predefined component life acceptance parameters based on the comparing.
